# EUROPEAN PATENT APPLICATION

(11) **EP 4 283 490 A1**
(43) Date of publication of application: **29.11.2023**
(21) Application number: 22200335.2
(22) Date of filing: 07.10.2022
(51) Int. Cl.: G06F 16/383, G06F 40/00

(54) **SYSTEMS AND METHODS FOR RULES-BASED MAPPING OF ANSWER SCRIPTS TO MARKERS**

(30) Priority: 27.05.2022 IN 202221030632
(71) Applicant: Tata Consultancy Services Limited, Maharashtra (IN)
(72) Inventor: SHAH, VIRAL PRAKASH, 400607 Thane West, Maharashtra (IN); PATNAR, MAHESH, 500081 Telangana (IN); DIVYA, KANAMULLA, 500081 Hyderabad, Telangana (IN); RIKKA, ROHITH, 500081 Hyderabad, Telangana (IN); KARAMCHETI, JAYALAKSHMI, 500081 Hyderabad, Telangana (IN)
(74) Representative: Goddar, Heinz J.

(57) **Abstract**

Existing digital marking systems employ round robin mechanism for assigning candidate responses to faculty members for correction which may require manually feeding routing data. These mechanisms do not accommodate specific requirements when rules are to be applied for answer scripts assignment to markers and do not take into consideration marking quality and schedule. Present disclosure provides systems and methods that achieve high marking standards by assigning answer script to a most eligible marker wherein parts of answer script are assigned to most eligible domain marker in case of segmented marking. Marker and answer script attributes are captured that form part of assignment rules thus enabling creation of conditions. Marker profiles are generated based on expertise and availability. Marker's submissions and past performance are analysed, and best suited markers are evaluated and ranked for correcting answer script, thereby ensuring highest possible level of marking quality and accuracy within stipulated time frame.

## Description

### CROSS-REFERENCE TO RELATED APPLICATIONS AND PRIORITY

The present application claims priority to Indian application no. 202221030632, filed on May 27, 2022.

### TECHNICAL FIELD

The disclosure herein generally relates to mapping techniques, and, more particularly, to systems and methods for rules-based mapping of answer scripts to markers.

### BACKGROUND

Digital marking systems have eased the process of valuation to a large extent as they overcome several challenges as opposed to manual marking such as tabulation errors, monitoring marking progress, cost of logistics and damage caused due to transportation, extended timelines for result processing and sharing. Existing digital marking systems employ round robin mechanism for assigning candidate responses (referred to as answer scripts and interchangeably used hereinafter) to faculty members (referred to as markers and interchangeably used hereinafter) for correction. Few of them may require an administrator to feed routing data manually. These mechanisms do not accommodate certain specific requirements when there are rules that need to be applied for answer scripts assignment to markers. Also, these approaches do not take into consideration any other factors that may impact the marking quality and schedule.

### SUMMARY

Embodiments of the present disclosure present technological improvements as solutions to one or more of the above-mentioned technical problems recognized by the inventors in conventional systems.

For example, in one aspect, there is provided a processor implemented method for rules-based mapping of answer scripts to markers. The method comprises receiving, via one or more hardware processors, one or more answer scripts in at least one media format, and information associated with a plurality of markers; pre-processing, via the one or more hardware processors, the one or more answer scripts based on the at least one media format to obtain a score of response in the one or more answer scripts; generating, via the one or more hardware processors, an answer script metadata based on the score of the response in the one or more answer scripts; analyzing, via one or more hardware processors, a set of pre-defined rules comprised in a database, applicable for each of the one or more answer scripts associated with the answer script metadata based on one or more answer script attribute values in the set of pre-defined rules; generating one or more instances of the one or more answer scripts based on the one or more answer script attribute values; converting one or more textual values of the one or more instances of the one or more answer scripts to one or more numerical constants to obtain one or more format-based answer scripts attributes; calculating a productivity metric for current day for the plurality of markers based on one or more observations during marking by the plurality of markers, and adjusting an overall ranking for each marker from the plurality of markers based on the productivity metric for the current day; merging the productivity metric for the current day with a plurality of productivity metrics till date to obtain merged productivity metric; determining an availability and a marking limit of one or more markers from the plurality of markers based on the merged productivity metric; transforming the merged productivity metric based on the availability and the marking limit of one or more markers to obtain transformed productivity metric into a pre-defined format; analyzing, via one or more hardware processors, the set of pre-defined rules comprised in the database, applicable for each marker comprised in the transformed productivity metric based on one or more marker attribute values in the set of pre-defined rules; generating one or more instances of one or more markers based on the one or more marker attribute values; converting one or more textual values of the one or more instances of the one or more markers to one or more numerical constants to obtain one or more format-based markers attributes; performing a comparison of (i) the answer script attribute value of the one or more format-based answer script attributes and (ii) the marker attribute value of the one or more format-based marker attributes to obtain a mapped data comprising a mapping of a relevant marker from the one or more markers for each answer script from the one or more answer scripts based on the overall ranking for each marker from the plurality of markers; categorizing the mapped data having (i) a status attribute comprising a value '1' as a first test data, and (ii) one or more remaining attributes as a second test data; and performing, via a logistic regression model, a sigmoid function on a value of the one or more remaining attributes of the second test data, using a pre-configured training mapped data to calculate a correctness score for the first test data for each format-based answer script; and updating the status attribute of the first test data based on the correctness score and a marking limit of a corresponding marker.

In an embodiment, the step of pre-processing, via the one or more hardware processors, the one or more answer scripts based on the at least one media format to obtain the score of the response in the one or more answer scripts comprises one or more of: scanning the one or more answer scripts to identify a plurality of characters and converting the plurality of characters into a digital format; generating a transcript of the one or more answer scripts; and performing grammatical and pronunciation correctness of the one or more answer scripts to obtain the score of the response in the one or more answer scripts.

In an embodiment, the score pertains to grammatical and pronunciation correctness of the response in the one or more answer scripts, and the pronunciation correctness is performed when the one or more answer scripts comprises an audio.

In an embodiment, the method comprises analyzing the one or more answer scripts to determine a response in the one or more answer scripts correspond to two or more domains and identifying a subset of the one or more answer scripts based on the two or more domains to obtain a set of segmented answer scripts; generating an answer script metadata for the set of segmented answer scripts; analyzing the set of pre-defined rules comprised in a database, applicable for each of the set of segmented answer scripts associated with the answer script metadata based on one or more answer script attribute values in the set of pre-defined rules; generating one or more instances of the set of segmented answer scripts based on the one or more answer script attribute values; and converting one or more textual values of the one or more instances of the set of segmented answer scripts to one or more numerical constants to obtain a set of segmented format-based answer script attributes.

In an embodiment, the method comprises performing a comparison of (i) the one or more answer script attribute values of the set of segmented format-based answer scripts and (ii) the one or more marker attribute values of the one or more format-based markers to obtain a temporary mapped data comprising temporary mapping of a format-based marker from the one or more format-based markers for each segmented format-based answer script from the set of segmented format-based answer scripts, wherein the temporary mapped data serves as a test mapped data; categorizing the test mapped data having (i) a status attribute comprising a value '1' as a first test data, and (ii) one or more remaining attributes as a second test data; and performing, via the logistic regression model, the sigmoid function on a value of the one or more remaining attributes of the second test data, using the pre-configured training mapped data to calculate a correctness score for the first test data for each format-based answer script; and updating the status attribute of the first test data based on the correctness score and a marking limit of a corresponding marker.

In another aspect, there is provided a processor implemented system for rules-based mapping of answer scripts to markers. The system comprises: a memory storing instructions; one or more communication interfaces; and one or more hardware processors coupled to the memory via the one or more communication interfaces, wherein the one or more hardware processors are configured by the instructions to: receive one or more answer scripts in at least one media format, and information associated with a plurality of markers; pre-process the one or more answer scripts based on the at least one media format to obtain a score of response in the one or more answer scripts; generate an answer script metadata based on the score of the response in the one or more answer scripts; analyze a set of pre-defined rules comprised in a database, applicable for each of the one or more answer scripts associated with the answer script metadata based on one or more answer script attribute values in the set of pre-defined rules; generate one or more instances of the one or more answer scripts based on the one or more answer script attribute values; convert one or more textual values of the one or more instances of the one or more answer scripts to one or more numerical constants to obtain one or more format-based answer scripts attributes; compute an overall ranking and performance for each marker from the plurality of markers; calculate a productivity metric for current day for the plurality of markers based on one or more observations during marking by the plurality of markers, and adjusting an overall ranking for each marker from the plurality of markers based on the productivity metric for the current day; merge the calculated productivity metric for the current day with a plurality of productivity metrics till date to obtain merged productivity metric; determine an availability and a marking limit of one or more markers from the plurality of markers based on the merged productivity metric; transform the merged productivity metric based on the availability and the marking limit of one or more markers to obtain transformed productivity metric into a pre-defined format; analyze the set of pre-defined rules comprised in the database, applicable for each marker comprised in the transformed productivity metric based on one or more marker attribute values in the set of pre-defined rules; generate one or more instances of one or more markers based on the one or more marker attribute values; convert one or more textual values of the one or more instances of the one or more markers to one or more numerical constants to obtain one or more format-based markers attributes; perform a comparison of (i) the answer script attribute value of the one or more format-based answer script attributes and (ii) the marker attribute value of the one or more format-based marker attributes to obtain a mapped data comprising a mapping of a relevant marker from the one or more markers for each answer script from the one or more answer scripts; categorize the mapped data having (i) a status attribute comprising a value '1' as a first test data, and (ii) one or more remaining attributes as a second test data; and performing, via the logistic regression model, the sigmoid function on a value of the one or more remaining attributes of the second test data, using the pre-configured training mapped data to calculate a correctness score for the first test data for each format-based answer script; and updating the status attribute of the first test data based on the correctness score and a marking limit of a corresponding marker.

In an embodiment, the one or more answer scripts are pre-processed based on the at least one media format to obtain the score of the response in the one or more answer scripts by performing one or more of: scanning the one or more answer scripts to identify a plurality of characters and converting the plurality of characters into a digital format; generating a transcript of the one or more answer scripts; and performing grammatical and pronunciation correctness of the one or more answer scripts to obtain the score of the response in the one or more answer scripts.

In an embodiment, the score pertains to grammatical and pronunciation correctness of the response in the one or more answer scripts, and the pronunciation correctness is performed when the one or more answer scripts comprises an audio

In an embodiment, the one or more hardware processors are configured by the instructions to analyze the one or more answer scripts to determine a response in the one or more answer scripts correspond to two or more domains and identify a subset of the one or more answer scripts based on the two or more domains to obtain a set of segmented answer scripts; generate an answer script metadata for the set of segmented answer scripts; analyze the set of pre-defined rules comprised in a database, applicable for each of the set of segmented answer scripts associated with the answer script metadata based on one or more answer script attribute values in the set of pre-defined rules; generate one or more instances of the set of segmented answer scripts based on the one or more answer script attribute values; and convert one or more textual values of the one or more instances of the set of segmented answer scripts to one or more numerical constants to obtain a set of segmented format-based answer script attributes.

In an embodiment, the one or more hardware processors are configured by the instructions to perform a comparison of (i) the one or more answer script attribute values of the set of segmented format-based answer scripts and (ii) the one or more marker attribute values of the one or more format-based markers to obtain a temporary mapped data comprising temporary mapping of a format-based marker from the one or more format-based markers for each segmented format-based answer script from the set of segmented format-based answer scripts, wherein the temporary mapped data serves as a test mapped data; categorizing the test mapped data having (i) a status attribute comprising a value '1' as a first test data, and (ii) one or more remaining attributes as a second test data; and perform, via the logistic regression model, the sigmoid function on a value of the one or more remaining attributes of the second test data, using the pre-configured training mapped data to calculate a correctness score for the first test data for each format-based answer script; and update the status attribute of the first test data based on the correctness score and a marking limit of a corresponding marker.

In yet another aspect, there are provided one or more non-transitory machine-readable information storage mediums comprising one or more instructions which when executed by one or more hardware processors cause rules-based mapping of answer scripts to markers by receiving one or more answer scripts in at least one media format, and information associated with a plurality of markers; pre-processing the one or more answer scripts based on the at least one media format to obtain a score of response in the one or more answer scripts; generating an answer script metadata based on the score of the response in the one or more answer scripts; analyzing a set of pre-defined rules comprised in a database, applicable for each of the one or more answer scripts associated with the answer script metadata based on one or more answer script attribute values in the set of pre-defined rules; generating one or more instances of the one or more answer scripts based on the one or more answer script attribute values; converting one or more textual values of the one or more instances of the one or more answer scripts to one or more numerical constants to obtain one or more format-based answer scripts attributes; calculating a productivity metric for current day for the plurality of markers based on one or more observations during marking by the plurality of markers, and adjusting an overall ranking for each marker from the plurality of markers based on the productivity metric for the current day; merging the calculated productivity metric for the current day with a plurality of productivity metrics till date to obtain merged productivity metric; determining an availability and a marking limit of one or more markers from the plurality of markers based on the merged productivity metric; transforming the merged productivity metric based on the availability of one or more markers to obtain transformed productivity metric into a pre-defined format; analyzing the set of pre-defined rules comprised in the database, applicable for each marker comprised in the transformed productivity metric based on one or more marker attribute values in the set of pre-defined rules; generating one or more instances of one or more markers based on the one or more marker attribute values; converting one or more textual values of the one or more instances of the one or more markers to one or more numerical constants to obtain one or more format-based markers attributes; performing a comparison of (i) the answer script attribute value of the one or more format-based answer script attributes and (ii) the marker attribute value of the one or more format-based marker attributes to obtain a mapped data comprising a mapping of a relevant marker from the one or more markers for each answer script from the one or more answer scripts based on the overall ranking for each marker from the plurality of markers; categorizing the mapped data having (i) a status attribute comprising a value '1' as a first test data, and (ii) one or more remaining attributes as a second test data; and performing, via a logistic regression model, a sigmoid function on a value of the one or more remaining attributes of the second test data, using a pre-configured training mapped data to calculate a correctness score for the first test data for each format-based answer script; and updating the status attribute of the first test data based on the correctness score and a marking limit of a corresponding marker.

In an embodiment, the step of pre-processing the one or more answer scripts based on the at least one media format to obtain the score of the response in the one or more answer scripts comprises one or more of: scanning the one or more answer scripts to identify a plurality of characters and converting the plurality of characters into a digital format; generating a transcript of the one or more answer scripts; and performing grammatical and pronunciation correctness of the one or more answer scripts to obtain the score of the response in the one or more answer scripts.

In an embodiment, the score pertains to grammatical and pronunciation correctness of the response in the one or more answer scripts, and the pronunciation correctness is performed when the one or more answer scripts comprises an audio.

In an embodiment, the method comprises analyzing the one or more answer scripts to determine a response in the one or more answer scripts correspond to two or more domains and identifying a subset of the one or more answer scripts based on the two or more domains to obtain a set of segmented answer scripts; generating an answer script metadata for the set of segmented answer scripts; analyzing the set of pre-defined rules comprised in a database, applicable for each of the set of segmented answer scripts associated with the answer script metadata based on one or more answer script attribute values in the set of pre-defined rules; generating one or more instances of the set of segmented answer scripts based on the one or more answer script attribute values; and converting one or more textual values of the one or more instances of the set of segmented answer scripts to one or more numerical constants to obtain a set of segmented format-based answer script attributes.

In an embodiment, the method comprises performing a comparison of (i) the one or more answer script attribute values of the set of segmented format-based answer scripts and (ii) the one or more marker attribute values of the one or more format-based markers to obtain a temporary mapped data comprising temporary mapping of a format-based marker from the one or more format-based markers for each segmented format-based answer script from the set of segmented format-based answer scripts, wherein the temporary mapped data serves as a test mapped data, wherein the test mapped data; categorizing the test mapped data having (i) a status attribute comprising a value '1' as a first test data, and (ii) one or more remaining attributes as a second test data; and performing, via the logistic regression model, the sigmoid function on a value of the one or more remaining attributes of the second test data, using the pre-configured training mapped data to calculate a correctness score for the first test data for each format-based answer script; and updating the status attribute of the first test data based on the correctness score and a marking limit of a corresponding marker.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 depicts an exemplary system for rules-based mapping of answer scripts to markers, in accordance with an embodiment of the present disclosure.
FIG. 2 depict an exemplary high level flow chart illustrating a method for rules-based mapping of answer scripts to markers, using the system of FIG. 1, in accordance with an embodiment of the present disclosure.
FIGS. 3A-3B-3C depict an exemplary flow chart illustrating a method for rules-based mapping of answer scripts to markers, using the system of FIG. 1, in accordance with an embodiment of the present disclosure.
FIG. 4 depicts a flow chart illustrating a method for pre-processing one or more answer scripts based on at least one media format to obtain a score of response in the one or more answer scripts, in accordance with an embodiment of the present disclosure.
FIG. 5 depicts a flow-chart illustrating a method for processing a plurality of markers to obtain transformed productivity metric into a pre-defined format, in accordance with an embodiment of the present disclosure.
FIG. 6 depicts a flow chart illustrating a method of analyzing a set of pre-defined rules comprised in a database, applicable for each marker and each answer script to obtain one or more format-based markers attributes and one or more marker attributes, in accordance with an embodiment of the present disclosure.
FIG. 7 depicts a flow chart illustrating a method for performing a mapping of the one or more answer scripts and the plurality of markers, in accordance with an embodiment of the present disclosure.
FIG. 8 depicts a flow chart illustrating a method for performing a mapping of the one or more answer scripts in two or more domains and the plurality of markers, in accordance with an embodiment of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Existing digital marking systems employ round robin mechanism for assigning candidate responses to faculty members for correction which may require manually feeding routing data. These mechanisms do not accommodate specific requirements when rules are to be applied for answer scripts assignment to markers (for example, faculty members) and do not take into consideration marking quality and schedule. Present disclosure provides systems and methods that achieve high marking standards by assigning answer script to a most eligible marker wherein parts of answer script are assigned to most eligible domain marker in case of segmented marking. Marker and answer script attributes are captured that form part of assignment rules thus enabling creation of conditions. Marker profiles are generated based on expertise and availability. Marker's submissions and past performance are analysed, and best suited markers are evaluated and ranked for correcting answer script, thereby ensuring highest possible level of marking quality and accuracy within stipulated time frame. More specifically, the system and method of the present disclosure perform (i) answer scripts normalization - wherein the system checks for rules applicable to answer scripts. If any rule requires inversion, the system generates negations for respective answer scripts data and transforms the generated negations into a specific format for mapping; (ii) marker data retrieval - wherein markers information is fetched, and current day productivity metric calculation is performed and merged with a plurality of productivity metrices till date; (iii) markers normalization wherein the system checks for rules applicable to markers. If any rule requires inversion, the system generates negations for respective markers data. For instance, the system creates constants (1, 2, 3, etc.) for general information such as gender, nationality, state, and the like and transforms the generated negations into a specific format; (iv) marker and answer script mapping wherein the system maps markers to answer scripts (domains as applicable) based on rules; and (v) marker ranking and finalizations wherein the system performs calculations based on test data provided and then conducts regression testing via a logistic regression model on the result to check correctness and deviations. Based on the above information, most eligible and suitable marker is assigned to the answer script (domains as applicable) for effective and accurate valuation.

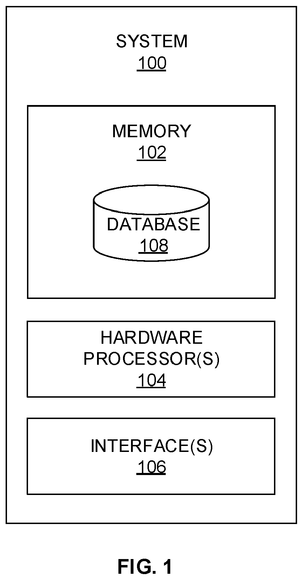

Referring now to the drawings, and more particularly to FIGS. 1 through 8, where similar reference characters denote corresponding features consistently throughout the figures, there are shown preferred embodiments and these embodiments are described in the context of the following exemplary system and/or method.

FIG. 1 depicts an exemplary system 100 for rules-based mapping of answer scripts to markers, in accordance with an embodiment of the present disclosure. In an embodiment, the system 100 may also be referred as mapping system and interchangeably used herein. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises information pertaining to a plurality of answer scripts, a plurality of markers, metadata associated with the plurality of answer scripts, the plurality of markers, and the like. The database 108 further comprises various pre-processing techniques as known in the art. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

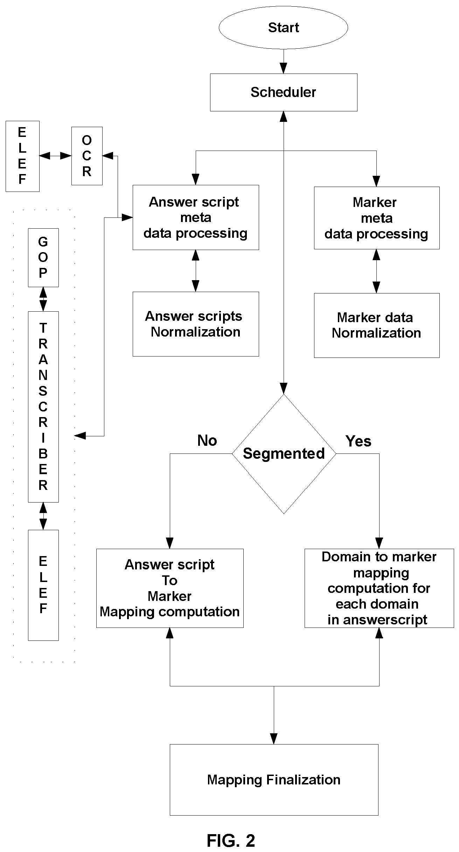

FIG. 2 depict an exemplary high level flow chart illustrating a method for rules-based mapping of answer scripts to markers, using the system 100 of FIG. 1, in accordance with an embodiment of the present disclosure. More specifically, the flow chart depicts a scheduler (not shown in FIG. 1) comprised in the system 100 that is invoked to initiate answer scripts metadata pre-processing and markers metadata pre-processing wherein the answer scripts and the markers are normalized via a normalization technique as known in the art. The scheduler is comprised in the memory 102 (not shown in FIG. 2) and invoked for execution and to perform the steps as described herein. In the pre-processing of the answer scripts metadata pre-processing, the system 100 may invoke various techniques as shown in FIG. 2. For instance, an English Language Framework (ELEF), an Optical Character Recognition (OCR) technique, a Transcriber, Goodness of Pronunciation technique (GOP) and the like may be invoked to normalize the answer scripts and generate a score of (or for) response in the one or more answer scripts. The pronunciation correctness is performed when the one or more answer scripts comprises an audio and the grammatical correctness of response in the one or more answer scripts is carried out for responses that are in digital format such as scanned answer scripts, and so on (refer Table 1 for scores pertaining to grammatical correctness (89) and pronunciation correctness (67)). Once the metadata is generated for both the answer scripts and markers, the scheduler then checks for segmentation of the answer scripts in case the responses in the answer scripts correspond to one or more domains. Based on the requirement of segmentation, the answer scripts are mapped to respective marker including domain and the same mapping is validated for finalization.

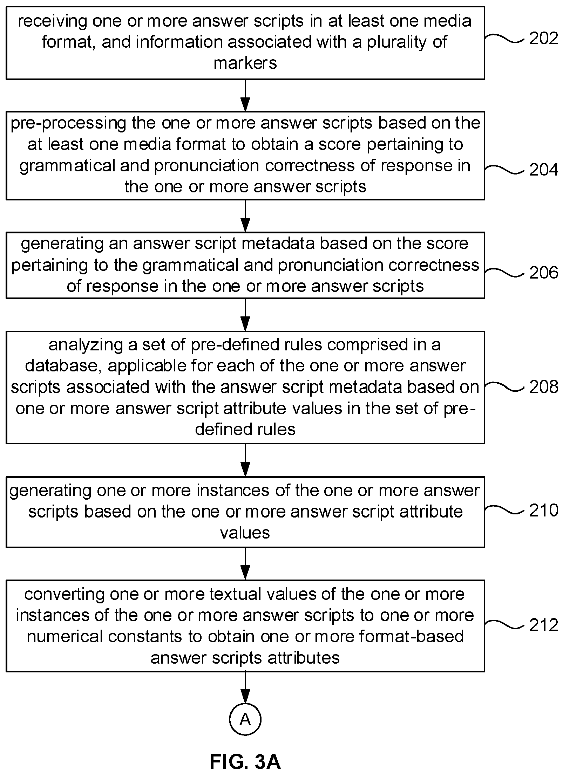

FIGS. 3A-3B-3C, with reference to FIGS. 1-2, depicts an exemplary flow chart illustrating a method for rules-based mapping of answer scripts to markers, using the system 100 of FIG. 1, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, the exemplary high level flow chart depicted in FIG. 2, and the flow diagram as depicted in FIGS. 3A-3B-3C.

At step 202 of the method of the present disclosure, the one or more hardware processors 104 receive one or more answer scripts in at least one media format, and information associated with a plurality of markers. In an embodiment, the expression 'one or more answer scripts' may also be referred as answer scripts, or response papers, and the like and may be interchangeably used herein. In an embodiment, the one or more answer scripts may be gathered from multiple sources (e.g., candidates from an examination center, candidate's assessment a question paper, and the like) from one or more formats. In one example embodiment, the answer scripts may be scanned and uploaded to the system 100 wherein the answer scripts may be handwritten format. In another example embodiment, the answer scripts may be an audio file, a video, a typed text description, a scanned text, or combinations thereof. In yet another embodiment, the answer scripts may be Internet based assessment (IBA - such as online assessment - wherein the responses may directly be fed in the same form as is to the system 100). Example of answer script may include, wherein an image is given to a candidate indicative of a pictorial depiction of kids and activities being carried out by them. The answer script may include a storyline of the pictorial depiction, in one example embodiment. Below is an illustrative example of an answer script:
*"Two children are playing in the park. The sun is shining brightly, and birds are flying in the sky. The girl is making a paper craft and the boy is flying paper rockets and his dog is looking at him"*

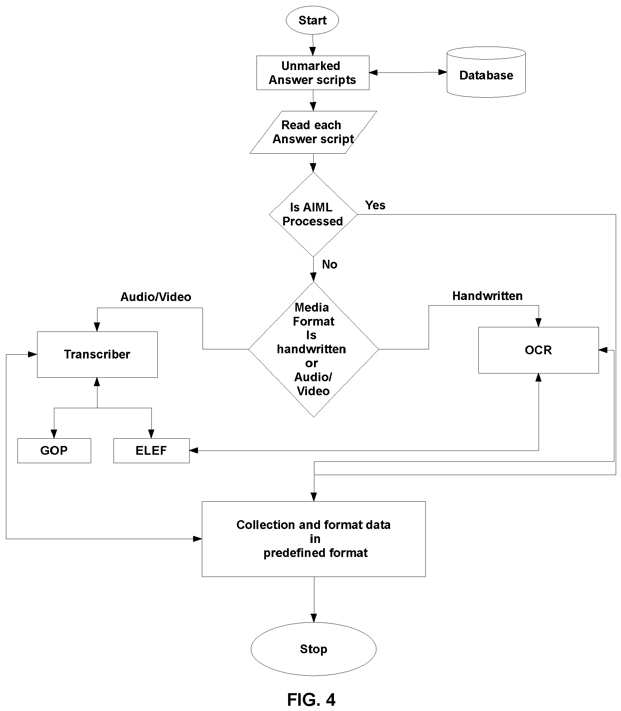

At step 204 method of the of the present disclosure, the one or more hardware processors 104 pre-process the one or more answer scripts based on the at least one media format to obtain a score of response in the one or more answer scripts. In other words, score for response in the answer scripts is obtained. For instance, the step of pre-processing the one or more answer scripts based on the at least one media format to obtain the score of the response in the one or more answer scripts comprises one or more of: scanning the one or more answer scripts to identify a plurality of characters and converting the plurality of characters into a digital format; generating a transcript of the one or more answer scripts; and performing grammatical and pronunciation correctness of the one or more answer scripts to obtain the score of the response in the one or more answer scripts. The score pertains to grammatical and pronunciation correctness of the response in the one or more answer scripts. The pronunciation correctness is performed when the one or more answer scripts comprises an audio. More specifically, if the answer scripts are received in a scanned format, then the OCR (Optical Character Recognition) technique is invoked by the system 100 wherein the handwritten text is scanned, and characters are identified which are converted to a digital format. If the answer scripts are received in the form or an audio, video, or combinations thereof, then the system 100 invokes a transcriber which generates the transcript for the responses. The character length is then derived from an intermediate output. In case of audio or video responses, the transcript generated from the transcriber is forwarded or transmitted to the ELEF. In case of typed or digitized handwritten text, the input is directly pushed to the ELEF. In both cases, ELEF generates scores for grammatical and spelling correctness wherein the system 100 invokes GOP technique which checks for pronunciation correctness. The pronunciation correctness of the one or more answer scripts is performed when the one or more answer scripts have an audio. Score(s) is/are generated for every single word as well as the overall sentence(s). The above various pre-processing techniques performed by the system 100 may be better understood by way of FIG. 4. More specifically, FIG. 4, with reference to FIGS. 1 through 3, depicts a flow chart illustrating a method for pre-processing the one or more answer scripts based on the at least one media format to obtain the score pertaining to grammatical and pronunciation correctness of (or for) response in the one or more answer scripts, in accordance with an embodiment of the present disclosure.

Below is an exemplary output from the GOP technique for a given answer script:
[{"gradingSystem":"Perfect","roundedValue":1,"absoluteValue":0.8657,"word":"MY "},{"gradingSystem":"ImprovementNeeded","roundedValue":0,"absoluteValue":0.18 25,"word":"SEVERITY"},{"gradingSystem":"Perfect","roundedValue":1,"absoluteV alue":0.7842,"word":"OF"},{"gradingSystem":"Perfect","roundedValue":1,"absolute Value":0.8249,"word":"THE"},{"gradingSystem":"ImprovementNeeded","roundedV alue":0,"absoluteValue":0.2907,"word":"LEG"},{"gradingSystem":"ImprovementNe eded","roundedValue":0,"absoluteValue":0.2679,"word":"IS"},{"gradingSystem":"I mprovementNeeded","roundedValue":0,"absoluteValue":0.0015,"word":"SAID"},{" gradingSystem":"Perfect","roundedValue":1,"absoluteValue":0.9469,"word":"I"},{"g radingSystem":"Perfect","roundedValue":1,"absoluteValue":0.8361,"word":"LEARN "},{"gradingSystem":"Perfect","roundedValue":1,"absoluteValue":0.8756,"word":"H OW"},{"gradingSystem":"Perfect","roundedValue":1,"absoluteValue":0.8974,"word ":"TO"},{"gradingSystem":"Perfect","roundedValue":1,"absoluteValue":0.8531,"wor d":"PLAY"},{"gradingSystem":"ImprovementNeeded","roundedValue":0,"absoluteV alue":0.342,"word":"IT"},{"gradingSystem":"AlmostPerfect","roundedValue":0,5,"a bsoluteValue":0.4803,"word":"AT"},{"gradingSystem":"ImprovementNeeded","roun dedValue":0,"absoluteValue":0.1925,"word":"AN"},{"gradingSystem":"Improvemen tNeeded","roundedValue":0,"absoluteValue":0.0855,"word":"ARIAN"}]

Below is an exemplary output from the ELEF for a given answer script Input: tennis favorite sport i enjoy it
Output: {"Message": "Success", "Result": [{"Result_For_GrammarCheck": [{"Error_String": "['tennis']","Suggestive_Sentence": "N/A","Error_Message": "This sentence does not start with an uppercase letter","Error_Position": "[(0, 5)]","Sentence": "tennis favorite sport i enjoy it."}],"Spelling_error": ["No Spelling Error Detected"]}]}

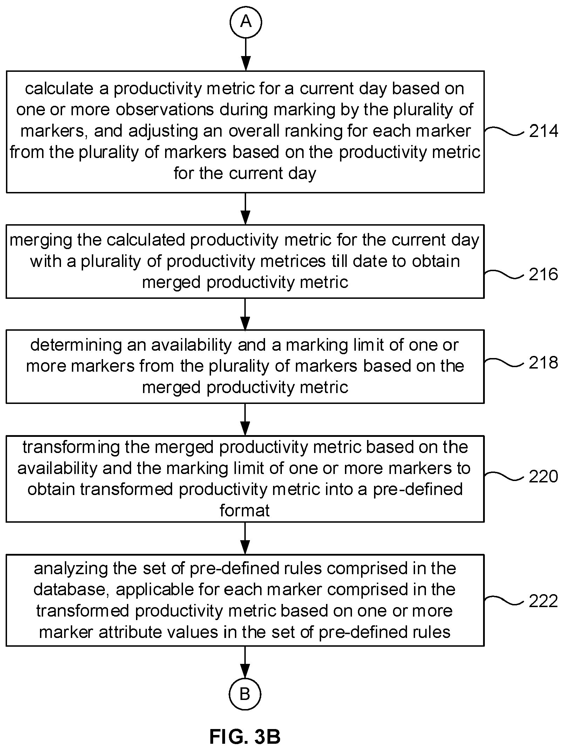

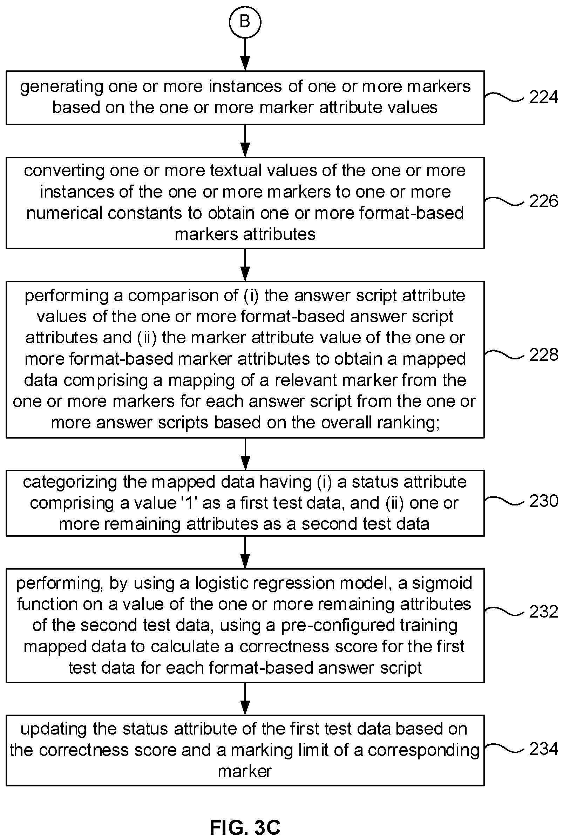

Referring to steps of FIG. 3, at step 206 of the method of the present disclosure, the one or more hardware processors 104 generate an answer script metadata based on the score of the response in the one or more answer scripts. Below is an example answer script metadata:

```
       {
       Answerscript_id: xxxxxxxx,
       Subject: xxxx,
       Domains: [xxxx,xxxx],
       Domain_Pagemapping: [{xx:yy},{xx:yy}]
       Medium: xxxx,
       Set: xxxx,
       Region: xxxx,
       Institute: xxxx,
       Size_ answerscript: xxxxx,
       Grammar: xxx (out of 100), //Score generated from integrated framework -
       English Language Evaluation Framework (ELEF)
       Pronunciation_goodness: xxx (out of 100), //Score generated from integrated
       framework - Goodness of Pronunciation (GOP)
       Voice_activity: available voice seconds in the full video/audio,
       File_path: storage location in Data center,
       Format: jpg, mp3, mp4 etc.
       }
```

An exemplary answer script metadata is shown in below Table 1

**Table 1**

| **Variable** | **Sample data** |
|---|---|
| Answerscript_id | AB0012345 |
| Subj ect | Science |
| Domains | Physics, Chemistry |
| Domain_Pagemapping | [{Physics:1},{Physics:2},{Chemistry:3}] |
| Medium | English |
| Set | Set 2 |
| Region | North |
| Institute | ABC University |
| Size_ answerscript | 2 in MB |
| Grammar | 89 |
| Pronunciation_goodness | 67 |
| Voice_activity | 40 |
| File_path | /store/abc/xyz/AB00 12345/0 1.mp3 |
| Format | Mp3 |

It is to be understood by a person having ordinary skill in the art or person skilled in the art though the examples described herein are related to subjects in English language and contain text content in English, such examples shall not be construed as limiting the scope of the present disclosure. In other words, the system and method described herein can also be implemented and used for answer scripts that of other languages (e.g., Hindi, native languages of specific region/countries) and involving other subjects such as Mathematics, arts, and the like. The score in such scenarios may not involve grammatical and pronunciation correctness, but the system 100 can generate a score of the approach followed in the answer script for a specify question. Such scoring mechanism shall not be construed as limiting the scope of the present disclosure.

In an embodiment of the present disclosure, at step 208, the one or more hardware processors 104 analyze a set of pre-defined rules comprised in a database, applicable for each of the one or more answer scripts associated with the answer script metadata based on one or more answer script attribute values in the set of pre-defined rules. In rules analysis stage, the system 100 fetches all mapping rules (e.g., set of pre-defined rules) configured by an entity (e.g., say an organization) for marking. In an embodiment, the system 100 analyzes each rule applicable for every answer script by substituting the answer script attribute value in the rule. For instance, considering "School" as attribute of marker and answer script in building the rule may be Answerscript. SCHOOL ≠ Marker. SCHOOL.

In an embodiment of the present disclosure, at step 210, the one or more hardware processors 104 generate one or more instances of the one or more answer scripts based on the one or more answer script attribute values. In an embodiment of the present disclosure, at step 212, the one or more hardware processors 104 convert one or more textual values of the one or more instances of the one or more answer scripts to one or more numerical constants to obtain one or more format-based answer scripts attributes.

At step 214 of the method of the present disclosure, the one or more hardware processors 104 calculate a productivity metric for current day based on one or more observations during marking by the plurality of markers and adjust an overall ranking for each marker from the plurality of markers based on the productivity metric for the current day. The overall ranking for each marker from the plurality of markers was based on the productivity metric for the current day (e.g., productivity metric includes but is not limited to, quality of marking the answer script(s), speed, and time taken for evaluating the answer script(s), total answer scripts evaluated, and so on). The one or more observations are depicted in the below exemplary marker information wherein the one or more observations include Total_answerscripts: xxxx, Reopened_answerscripts: xxxx, so on till Mode_marking: voice/ mouse and keyboard, and Preferred_Set: xxxxxxxx. The information such as Gender: M/F, Region: xxxxxxxxxx, Institute: xxxxxxx, Age: xxxxxxxxx, Work_experience: xxxx, Subject: xxxxxxxx, Medium: xxxxxxxx, Domains: [xxx, xxx, xxx], and so on is referred Administrator configured metadata. Therefore, the system when it generates the marker metadata comprises system generated marker data and the administrator configured metadata.

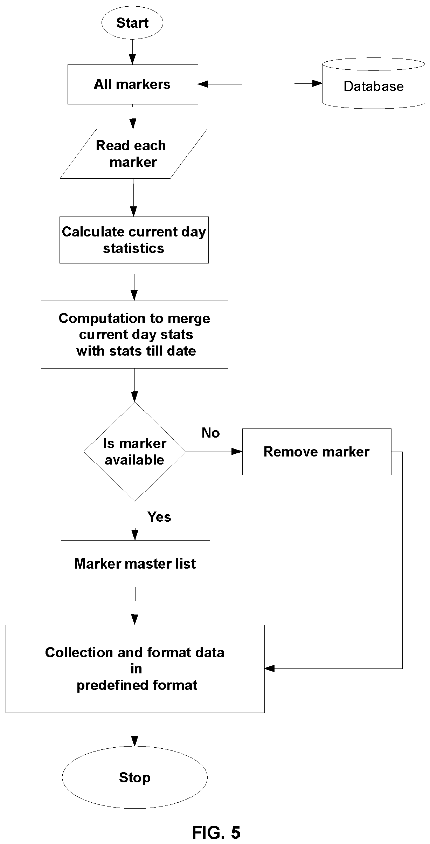

At step 216 of the method of the present disclosure, the one or more hardware processors 104 merge the calculated productivity metric for the current day with a plurality of productivity metrices till date (e.g., including productivity metric of previous day or days/weeks and so on) to obtain merged productivity metric. At step 218 of the method of the present disclosure, the one or more hardware processors 104 determine an availability and a marking limit of one or more markers (e.g., wherein a specific marker is available for evaluating answer scripts, or whether a specific marker has already reached his/her evaluation quote for the day, week, and so on) from the plurality of markers based on the merged productivity metric and transform the merged productivity metric based on the availability and the marking limit of one or more markers to obtain transformed productivity metric into a pre-defined format at step 220. The steps 214 through 220 are better understood by way of flow-chart depicted in FIG. 5. More specifically, FIG. 5, with reference to FIGS. 1 through 4, depicts a flow-chart illustrating a method for processing the plurality of markers to obtain transformed productivity metric into the pre-defined format, in accordance with an embodiment of the present disclosure.

Below is an example of marker information and computation of the statistics (also referred productivity metric and may be interchangeably used herein) for current day for the plurality of markers:

```
       {
       User id: xxxxxxxxx,
       Total_answerscripts: xxxx,
       Reopened_answerscripts: xxxx, // Number of submitted answer scripts that
       have been reopened by reviewer due to incorrectness
       Total_time: xxxxx,
       Attendance: present/absent,
       Actual_marking_marks: xxxx,
       Double_marking_marks: xxxx,
       Total_seeds_marked: xxxx,
       Total_seed_passed: xxxx,
       Total_submits: xxxx,
       Total_as_marked_review: xxxx, //Number of answer scripts for which the
       marker was unsure of marks assignment
       Total_drafts: xxxx,
       Total_remarking_as: xxxx, //Number of answer scripts that were picked for
       remarking as student was not satisfied with the score allotted
       Total_rejects: xxxx, //Number of answer scripts that were skipped and left
       unmarked by the marker
       Total_annotation: xxxx,
       Total_comments: xxxx,
       Total_feedbacks: xxxx,
       Mode_marking: voice/ mouse and keyboard,
       Gender: M/F,
       Region: xxxxxxxxxx,
       Institute: xxxxxxx,
       Age: xxxxxxxxx,
       Work_experience: xxxx,
       Subject: xxxxxxxx,
       Medium: xxxxxxxx,
       Domains: [xxx, xxx, xxx],
       Preferred_Set: xxxxxxxx, //In case multiple question papers are tagged to the
       same subject
       ...
       }
```

Below Table 2 depicts productivity metric computed for a current day

**Table 2**

| | |
|---|---|
| User_id | User0001 |
| Total_answerscripts | 50 |
| Reopened_answerscripts | 5 |
| Total_time | 6000 in seconds |
| Attendance | Present |
| Actual_marking_marks | 80 |
| Double marking marks | 70 |
| Total_seeds_marked | 10 |
| Total_seed_passed | 8 |
| Total_submits | 40 |
| Total_as_marked_review | 5 |
| Total_drafts | 5 |
| Total_remarking_as | 2 |
| Total_rejects | 5 |
| Total_annotation | 147 |
| Total_comments | 129 |
| Total_feedbacks | 3 |
| Mode_marking | 1 (mouse and keyboard) |
| Gender | M |
| Region | North |
| Institute | ABC University |
| Age | 43 |
| Work_experience | 13 |
| Subj ect | Science |
| Medium | English |
| Domains | Physics |
| Preferred_Set | Set 1 |

The performance calculation of the previous day is computed for each marker based on predefined formulae. After the calculation of each performance attribute, each marker data will undergo rating and average computations to project overall marker ranking and performance

The following table provides a sample illustration of marker performance attribute calculation:

**Table 3**

| Attribute | Formula |
|---|---|
| Marking rate / average marking speed - per AB | ((Totalabs - reopenedabs) ^{∗} avg time taken for evaluation for that day)/total time taken for that day |
| | Example: 80 |
| Average marking time per AB | total marking time/ total abs |
| | Example: 120 sec |
| Number of working hours | total working time in minutes |
| | Example: 80 min |
| Attendance | present or absent for the day (if any submit available will consider as present) or from login audit table |
| | Example: Present |
| Variance with review / double marking | actual marking marks - double marking marks |
| | Example: -3 |
| Seed performance | seed passed / total seeds marked |
| | Example: 80% |
| Meeting daily submission targets | Total submits / limit |
| | Example: 80% |
| Number of answer scripts reopened or rescored by reviewer and reasons | No of reopens for the day. |
| | Example: 5 |
| Number of answer scripts submitted with mark for review | No of abs having mark for review |
| | Example: 3 |
| Marking accuracy percentage | (total abs submitted - remarking abs) / total abs |
| | Example: 95% |
| Gender | M/F |
| Region | North |
| Institute | ABC University |
| Age or technical expertise | 43 |
| Work experience | 13 |
| Subject, medium, domains | Science, English, Physics |
| Application usage rating - annotation, comments, login failure, feedback, mode of marking (voice, mouse, keyboard) | Example: 80% |
| Number of Abs rejected and reasons | Example: 5 |
| Preferred set | Example: Set 1 |
| Marking start and end date - User availability window along with planned leaves | First thing to be checked while calculating assignment |

In the above Table 3, the left column refers to productivity metric. Advanced computations are executed in addition to the above, to project the overall marker ranking (also referred as overall ranking and interchangeably used herein). In case of segmented marking, the ranking is computed for each domain. The sample output attributes are like below:

```
       {
       User_id: xxxxx,
       Gender: M/F/O,
       Region: xxxxxxxxxx,
       Institute: xxxxxxx,
       Age: xxxxxxxxx,
       Work_experience: xxxx, //Stream and number of years
       Subject: xxxxxxxx,
       Medium: xxxxxxxx,
       Domains: [xxx, xxx, xxx],
       Preferred_Set: xxxxxxxx, //Set that was picked most frequently for valuation
       Marking rate: xxxxx, //Number of submissions per day
       Avg_marking_time: xxxx,
       Total_working_hrs: xxxx,
       Attendance: xxxx,
       Variance: xxxx,
       Seed_performance: xxxx, //Number of seeds attempted and number of seeds
       passed
       Target_submission_rate: xxxx, //Boolean - complete required number of
       scripts valuation
       Reopens: xxxx, //Number of answer scripts submissions that were nullified due
       to incorrectness
       Mark_reviews: xxxx, //Number of answer scripts for which the marker was
       unsure about the marks' allotment
       App_usage_rate: xxxx,
       Rejects: xxxx, //Number of answer scripts that were skipped without evaluation
       Leave_for_current_day: Yes/No,
       ... }
```

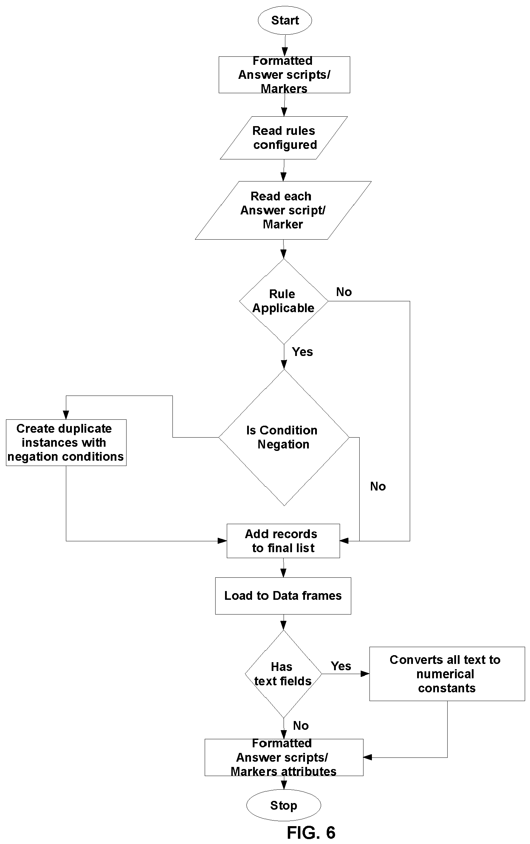

Referring to steps of FIG. 3, at step 222 of the method of the present disclosure, the one or more hardware processors 104 analyze the set of pre-defined rules comprised in the database, applicable for each marker comprised in the transformed productivity metric based on one or more marker attribute values in the set of pre-defined rules. At step 224 of the method of the present disclosure, the one or more hardware processors 104 generate one or more instances of one or more markers based on the one or more marker attribute values. At step 226 of the method of the present disclosure, the one or more hardware processor 104 convert one or more textual values of the one or more instances of the one or more markers to one or more numerical constants to obtain one or more format-based markers attributes. FIG. 6, with reference to FIGS. 1 through 5, depicts a flow chart illustrating a method of analyzing a set of pre-defined rules comprised in the database, applicable for each marker and each answer script to obtain one or more format-based markers attributes and one or more marker attributes, in accordance with an embodiment of the present disclosure.

At step 228 of the present disclosure, the one or more hardware processors 104 perform a comparison of (i) the answer script attribute values of the one or more format-based answer script attributes and (ii) the marker attribute value of the one or more format-based marker attributes to obtain a mapped data comprising a mapping of a relevant marker from the one or more markers for each answer script from the one or more answer scripts based on the overall ranking. More specifically, rules pertaining to the one or more answer scripts are compared to rules of the one or more markers are compared to determine a match of attribute values. In other words, if the rule(s) of a specific marker (e.g., marker A) matches with rule(s) of the answer script(s) (A), the marker A is mapped to the answer script A. For instance, if the condition from a rule pertaining the marker A and answer script A satisfy each other, then the marker A is mapped to answer script A. At step 230 of the method of the present disclosure, the one or more hardware processors 104 categorize the mapped data having (i) a status attribute comprising a value '1' as a first test data, and (ii) one or more remaining attributes as a second test data. At step 232 of the method of the present disclosure, the one or more hardware processors 104 perform, via a logistic regression model, a sigmoid function on a value of the one or more remaining attributes of the second test data, using a pre-configured training mapped data to calculate a correctness score for the first test data for each format-based answer script. At step 234 of the present disclosure, the one or more hardware processors 104 update the status attribute (comprising the value ' 1') of the first test data based on the correctness score and a marking limit of a corresponding marker.

Further, multiple instances of the answer script may be generated with modified attribute values to fit the rule. If the answer script is segmented with multiple domains, multiple instances for each domain are generated. For instance, in case 'M' instances are derived for a rule and the answer script has 'N' domains that need to be marked, then the system generates 'M X N' instances. In other words, the system 100 analyses the one or more answer scripts to determine whether a response in the one or more answer scripts corresponds to two or more domains and identifies a subset of the one or more answer scripts based on the two or more domains to obtain a set of segmented answer scripts. The system 100 further generates an answer script metadata (e.g., such metadata further includes administrator configured answer metadata as described for marker metadata) for the set of segmented answer scripts. The set of pre-defined rules comprised in the database, applicable for each of the set of segmented answer scripts associated with the answer script metadata are analysed based on one or more answer script attribute values in the set of pre-defined rules and one or more instances of the set of segmented answer scripts are generated based on the one or more answer script attribute values. The system 100 then converts one or more textual values of the one or more instances of the set of segmented answer scripts to one or more numerical constants to obtain a set of segmented format-based answer script attributes.

The system 100 further performs a comparison of (i) the one or more answer script attribute values of the set of segmented format-based answer scripts and (ii) the one or more marker attribute values of the one or more format-based markers to obtain a temporary mapped data. The temporary mapped data includes temporary mapping of a format-based marker from the one or more format-based markers for each segmented format-based answer script from the set of segmented format-based answer scripts. The temporary mapped data serves as a test mapped data as mentioned above.

The test mapped data comprises the first status attribute, the second status attribute, and the third status attribute, in one example embodiment of the present disclosure. The test mapped data having (i) a status attribute comprising a value ' 1' is categorized as a first test data, and (ii) one or more remaining attributes is categorized as a second test data, and the sigmoid function is performed, via the logistic regression model, on a value of the one or more remaining attributes of the second test data, using the pre-configured training mapped data to calculate a correctness score for the first test data for each format-based answer script. Further, the status attribute comprising the value '1' of the first test data is updated based on the correctness score and a marking limit of a corresponding marker. The above steps are performed as like steps 224 till 230. The above steps 224 till 230 and the steps described for domain based answer scripts are better understood by way of following description:

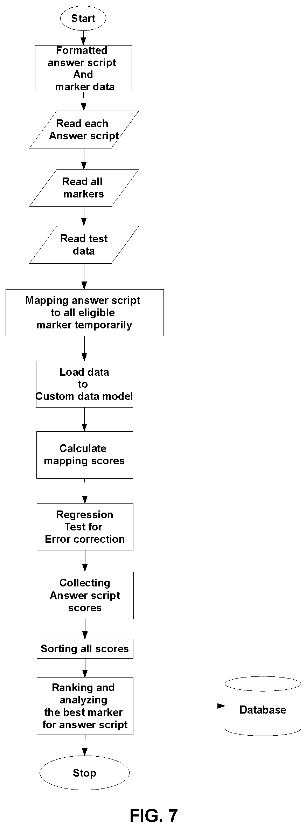

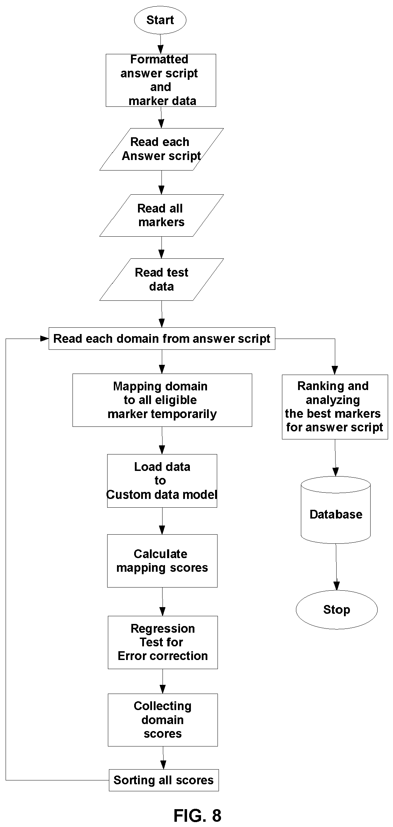

In answer script mapping stage, the system 100 fetches the transformed answer script and marker data attributes formulated from earlier outputs and compares the relevant attributes. Based on a satisfaction quotient, the system 100 maps all markers to answer script temporarily. In case of segmented answer scripts which are domain based, the system 100 maps all markers to corresponding answer script domains temporarily (here after called as test data) with status attribute as 0 or 1 where 0 indicates match failed (e.g., says second status attribute) and 1 indicates a successful match (e.g., the first status attribute). The successful matches which is the test data with status 1 is then loaded into data frames. The system 100 categorizes first and second status attribute and remaining attributes (e.g., third status attribute) as y test and x_test respectively. The system then fetches training data (here after called as train data) which is already made available (e.g., also referred as the pre-configured training mapped data or pre-defined training mapped data and interchangeably used herein) and loads into data frames. The system 100 loads test data and train data into the logistic regression model in machine learning. Then system 100 performs a sigmoid function on x_test data using training data which is already to calculate the correctness of temporary mapping status attribute y test which lies between 0 and 1 (example: 0.5, 0.9, etc.) (hereinafter called as mapping score) for each answer script to users. In case of segmented marking, the process is drilled down to the domain level and repeated till the mapping score is generated for all domains in the answer script(s). In other words, the scores generated during mapping of answer scripts and markers undergo regression testing using the pre-configured training mapped data to re-check score correctness. Based on deviations, the logistic regression model is further trained to improve mapping efficiency. The mapping scores generated during mapping is sorted in at least one order (e.g., say descending order, and such order shall not be construed as limiting the scope of the present disclosure) and the best scored marker is assigned to the respective answer script. FIG. 7, with reference to FIGS. 1 through 6, depicts a flow chart illustrating a method for performing a mapping of the one or more answer scripts and the plurality of markers, in accordance with an embodiment of the present disclosure. FIG. 8, with reference to FIGS. 1 through 7, depicts a flow chart illustrating a method for performing a mapping of the one or more answer scripts in two or more domains and the plurality of markers, in accordance with an embodiment of the present disclosure.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method, comprising:
receiving, via one or more hardware processors, one or more answer scripts in at least one media format, and information associated with a plurality of markers (202);
pre-processing, via the one or more hardware processors, the one or more answer scripts based on the at least one media format to obtain a score of response in the one or more answer scripts (204);
generating, via the one or more hardware processors, an answer script metadata based on the score of the response in the one or more answer scripts (206);
analyzing, via the one or more hardware processors, a set of pre-defined rules comprised in a database, applicable for each of the one or more answer scripts associated with the answer script metadata based on one or more answer script attribute values in the set of pre-defined rules (208);
generating, via the one or more hardware processors, one or more instances of the one or more answer scripts based on the one or more answer script attribute values (210);
converting, via the one or more hardware processors, one or more textual values of the one or more instances of the one or more answer scripts to one or more numerical constants to obtain one or more format-based answer scripts attributes (212);
calculating, via the one or more hardware processors, a productivity metric for a current day based on one or more observations during marking by the plurality of markers, and adjusting an overall ranking for each marker from the plurality of markers based on the productivity metric for the current day (214);
merging, via the one or more hardware processors, the calculated productivity metric for the current day with a plurality of productivity metrices till date to obtain merged productivity metric (216);
determining, via the one or more hardware processors, an availability and a marking limit of one or more markers from the plurality of markers based on the merged productivity metric (218);
transforming, via the one or more hardware processors, the merged productivity metric based on the availability and the marking limit of one or more markers to obtain transformed productivity metric into a pre-defined format (220);
analyzing, via the one or more hardware processors, the set of pre-defined rules comprised in the database, applicable for each marker comprised in the transformed productivity metric based on one or more marker attribute values in the set of pre-defined rules (222);
generating, via the one or more hardware processors, one or more instances of one or more markers based on the one or more marker attribute values (224);
converting, via the one or more hardware processors, one or more textual values of the one or more instances of the one or more markers to one or more numerical constants to obtain one or more format-based markers attributes (226);
performing, via the one or more hardware processors, a comparison of (i) the answer script attribute values of the one or more format-based answer script attributes and (ii) the marker attribute value of the one or more format-based marker attributes to obtain a mapped data further comprising a mapping of a relevant marker from the one or more markers for each answer script from the one or more answer scripts based on the overall ranking (228);
categorizing, via the one or more hardware processors, the mapped data having (i) a status attribute further comprising a value '1' as a first test data, and (ii) one or more remaining attributes as a second test data (230);
performing, by using a logistic regression model via the one or more hardware processors, a sigmoid function on a value of the one or more remaining attributes of the second test data, using a pre-configured training mapped data to calculate a correctness score for the first test data for each format-based answer script (232); and
updating, via the one or more hardware processors, the status attribute and the first test data based on the correctness score and a marking limit of a corresponding marker (234).

2. The processor implemented method of claim 1, wherein the step of pre-processing, via the one or more hardware processors, the one or more answer scripts based on the at least one media format to obtain the score of the response in the one or more answer scripts comprises one or more of:
scanning the one or more answer scripts to identify a plurality of characters and converting the plurality of characters into a digital format;
generating a transcript of the one or more answer scripts; and
performing grammatical and pronunciation correctness of the one or more answer scripts to obtain the score of the response in the one or more answer scripts.

3. The processor implemented method of claim 2, wherein the score pertains to grammatical and pronunciation correctness of the response in the one or more answer scripts, and wherein the pronunciation correctness is performed when the one or more answer scripts comprises an audio.

4. The processor implemented method of claim 1, further comprising
analyzing the one or more answer scripts to determine a response in the one or more answer scripts correspond to two or more domains and identifying a subset of the one or more answer scripts based on the two or more domains to obtain a set of segmented answer scripts;
generating an answer script metadata for the set of segmented answer scripts;
analyzing the set of pre-defined rules comprised in a database, applicable for each of the set of segmented answer scripts associated with the answer script metadata based on one or more answer script attribute values in the set of pre-defined rules;
generating one or more instances of the set of segmented answer scripts based on the one or more answer script attribute values; and
converting one or more textual values of the one or more instances of the set of segmented answer scripts to one or more numerical constants to obtain a set of segmented format-based answer script attributes.

5. The processor implemented method of claim 4, further comprising
performing a comparison of (i) the set of segmented format-based answer script attributes of the set of segmented format-based answer scripts and (ii) the one or more marker attribute values of the one or more format-based markers to obtain a temporary mapped data further comprising temporary mapping of a format-based marker from the one or more format-based markers for each segmented format-based answer script from the set of segmented format-based answer scripts, wherein the temporary mapped data serves as a test mapped data;
categorizing the test mapped data having (i) a status attribute further comprising a value '1' as a first test data, and (ii) one or more remaining attributes as a second test data;
performing, via the logistic regression model, the sigmoid function on a value of the one or more remaining attributes of the second test data, using the pre-configured training mapped data to calculate a correctness score for the first test data for each format-based answer script; and
updating the status attribute of the first test data based on the correctness score and a marking limit of a corresponding marker.

6. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive one or more answer scripts in at least one media format, and information associated with a plurality of markers;
pre-process the one or more answer scripts based on the at least one media format to obtain a score of response in the one or more answer scripts;
generate an answer script metadata based on the score of the response in the one or more answer scripts;
analyze a set of pre-defined rules comprised in a database, applicable for each of the one or more answer scripts associated with the answer script metadata based on one or more answer script attribute values in the set of pre-defined rules;
generate one or more instances of the one or more answer scripts based on the one or more answer script attribute values;
convert one or more textual values of the one or more instances of the one or more answer scripts to one or more numerical constants to obtain one or more format-based answer scripts attributes;
calculate a productivity metric for a current day based on one or more observations during marking by the plurality of markers, and adjusting an overall ranking for each marker from the plurality of markers based on the productivity metric for the current day;
merge the calculated productivity metric for the current day with a plurality of productivity metrices till date to obtain merged productivity metric;
determine an availability and marking limit of one or more markers from the plurality of markers based on the merged productivity metric;
transform the merged productivity metric based on the availability and the marking limit of one or more markers to obtain transformed productivity metric into a pre-defined format;
analyze the set of pre-defined rules comprised in the database, applicable for each marker comprised in the transformed productivity metric based on one or more marker attribute values in the set of pre-defined rules;
generate one or more instances of one or more markers based on the one or more marker attribute values;
convert one or more textual values of the one or more instances of the one or more markers to one or more numerical constants to obtain one or more format-based markers attributes;
perform a comparison of (i) the answer script attribute values of the one or more format-based answer script attributes and (ii) the marker attribute value of the one or more format-based marker attributes to obtain a mapped data further comprising a mapping of a relevant marker from the one or more markers for each answer script from the one or more answer scripts based on the overall ranking;
categorize the mapped data having (i) a status attribute further comprising a value '1' as a first test data, and (ii) one or more remaining attributes as a second test data;
perform, by using a logistic regression model, a sigmoid function on a value of the one or more remaining attributes of the second test data, using a pre-configured training mapped data to calculate a correctness score for the first test data for each format-based answer script; and
update the status attribute of the first test data based on the correctness score and a marking limit of a corresponding marker.

7. The system of claim 6, wherein the one or more answer scripts are pre-processed to obtain the score of the response in the one or more answer scripts by performing one or more of:
scanning the one or more answer scripts to identify a plurality of characters and converting the plurality of characters into a digital format;
generating a transcript of the one or more answer scripts; and
performing grammatical and pronunciation correctness of the one or more answer scripts to obtain the score of the response in the one or more answer scripts.

8. The system of claim 7, wherein the score pertains to grammatical and pronunciation correctness of the response in the one or more answer scripts, and wherein the pronunciation correctness is performed when the one or more answer scripts comprises an audio.

9. The system of claim 6, wherein the one or more hardware processors are configured by the instructions to:
analyze the one or more answer scripts to determine a response in the one or more answer scripts correspond to two or more domains and identifying a subset of the one or more answer scripts based on the two or more domains to obtain a set of segmented answer scripts;
generate an answer script metadata for the set of segmented answer scripts;
analyze the set of pre-defined rules comprised in a database, applicable for each of the set of segmented answer scripts associated with the answer script metadata based on one or more answer script attribute values in the set of pre-defined rules;
generate one or more instances of the set of segmented answer scripts based on the one or more answer script attribute values; and
convert one or more textual values of the one or more instances of the set of segmented answer scripts to one or more numerical constants to obtain a set of segmented format-based answer script attributes.

10. The system of claim 8, wherein the one or more hardware processors are configured by the instructions to:
perform a comparison of (i) the set of segmented format-based answer script attributes of the set of segmented format-based answer scripts and (ii) the one or more marker attributes of the one or more format-based markers to obtain a temporary mapped data further comprising temporary mapping of a format-based marker from the one or more format-based markers for each segmented format-based answer script from the set of segmented format-based answer scripts, wherein the temporary mapped data serves as a test mapped data;
categorize the test mapped data having (i) a status attribute further comprising a value '1' as a first test data, and (ii) one or more remaining attributes as a second test data;
perform, via the logistic regression model, the sigmoid function on a value of the one or more remaining attributes of the second test data, using the pre-configured training mapped data to calculate a correctness score for the first test data for each format-based answer script; and
update the first status attribute and the second status attribute of the first test data based on the correctness score and a marking limit of a corresponding marker.

11. One or more non-transitory machine-readable information storage mediums comprising one or more instructions which when executed by one or more hardware processors cause:
receiving one or more answer scripts in at least one media format, and information associated with a plurality of markers;
pre-processing the one or more answer scripts based on the at least one media format to obtain a score of response in the one or more answer scripts;
generating an answer script metadata based on the score of the response in the one or more answer scripts;
analyzing a set of pre-defined rules comprised in a database, applicable for each of the one or more answer scripts associated with the answer script metadata based on one or more answer script attribute values in the set of pre-defined rules;
generating one or more instances of the one or more answer scripts based on the one or more answer script attribute values;
converting one or more textual values of the one or more instances of the one or more answer scripts to one or more numerical constants to obtain one or more format-based answer scripts attributes;
calculating a productivity metric for a current day based on one or more observations during marking by the plurality of markers, and adjusting an overall ranking for each marker from the plurality of markers based on the productivity metric for the current day;
merging the calculated productivity metric for the current day with a plurality of productivity metrices till date to obtain merged productivity metric;
determining an availability and a marking limit of one or more markers from the plurality of markers based on the merged productivity metric;
transforming the merged productivity metric based on the availability and the marking limit of one or more markers to obtain transformed productivity metric into a pre-defined format;
analyzing the set of pre-defined rules comprised in the database, applicable for each marker comprised in the transformed productivity metric based on one or more marker attribute values in the set of pre-defined rules;
generating one or more instances of one or more markers based on the one or more marker attribute values;
converting one or more textual values of the one or more instances of the one or more markers to one or more numerical constants to obtain one or more format-based markers attributes;
performing a comparison of (i) the answer script attribute values of the one or more format-based answer script attributes and (ii) the marker attribute value of the one or more format-based marker attributes to obtain a mapped data further comprising a mapping of a relevant marker from the one or more markers for each answer script from the one or more answer scripts based on the overall ranking;
categorizing the mapped data having (i) a status attribute further comprising a value '1' as a first test data, and (ii) one or more remaining attributes as a second test data;
performing, by using a logistic regression model, a sigmoid function on a value of the one or more remaining attributes of the second test data, using a pre-configured training mapped data to calculate a correctness score for the first test data for each format-based answer script; and
updating the status attribute and the first test data based on the correctness score and a marking limit of a corresponding marker.

12. The one or more non-transitory machine-readable information storage mediums of claim 11, wherein the step of pre-processing, via the one or more hardware processors, the one or more answer scripts based on the at least one media format to obtain the score of the response in the one or more answer scripts comprises one or more of:
scanning the one or more answer scripts to identify a plurality of characters and converting the plurality of characters into a digital format;
generating a transcript of the one or more answer scripts; and
performing grammatical and pronunciation correctness of the one or more answer scripts to obtain the score of the response in the one or more answer scripts.

13. The one or more non-transitory machine-readable information storage mediums of claim 12, wherein the score pertains to grammatical and pronunciation correctness of the response in the one or more answer scripts, and wherein the pronunciation correctness is performed when the one or more answer scripts comprises an audio.

14. The one or more non-transitory machine-readable information storage mediums of claim 11, wherein the one or more instructions which when executed by the one or more hardware processors further cause
analyzing the one or more answer scripts to determine a response in the one or more answer scripts correspond to two or more domains and identifying a subset of the one or more answer scripts based on the two or more domains to obtain a set of segmented answer scripts;
generating an answer script metadata for the set of segmented answer scripts;
analyzing the set of pre-defined rules comprised in a database, applicable for each of the set of segmented answer scripts associated with the answer script metadata based on one or more answer script attribute values in the set of pre-defined rules;
generating one or more instances of the set of segmented answer scripts based on the one or more answer script attribute values; and
converting one or more textual values of the one or more instances of the set of segmented answer scripts to one or more numerical constants to obtain a set of segmented format-based answer script attributes.

15. The one or more non-transitory machine-readable information storage mediums of claim 14, wherein the one or more instructions which when executed by the one or more hardware processors further cause
performing a comparison of (i) the set of segmented format-based answer script attributes of the set of segmented format-based answer scripts and (ii) the one or more marker attribute values of the one or more format-based markers to obtain a temporary mapped data further comprising temporary mapping of a format-based marker from the one or more format-based markers for each segmented format-based answer script from the set of segmented format-based answer scripts, wherein the temporary mapped data serves as a test mapped data;
categorizing the test mapped data having (i) a status attribute further comprising a value ' 1' as a first test data, and (ii) one or more remaining attributes as a second test data;
performing, via the logistic regression model, the sigmoid function on a value of the one or more remaining attributes of the second test data, using the pre-configured training mapped data to calculate a correctness score for the first test data for each format-based answer script; and
updating the status attribute of the first test data based on the correctness score and a marking limit of a corresponding marker.
